(19) Europäisches Patentamt / European Patent Office / Office européen des brevets

(11) **EP 2 647 111 B1**

(12) **EUROPEAN PATENT SPECIFICATION**

(45) Date of publication and mention of the grant of the patent:
**31.12.2014 Bulletin 2015/01**

(51) Int Cl.:
*H02K 19/24* *(2006.01)*     *H02K 1/27* *(2006.01)*
*H02K 9/06* *(2006.01)*

(21) Application number: **11807754.4**

(22) Date of filing: **30.11.2011**

(86) International application number:
**PCT/IB2011/055393**

(87) International publication number:
**WO 2012/073206 (07.06.2012 Gazette 2012/23)**

(54) **ELECTRIC GENERATOR**

STROMGENERATOR

GÉNÉRATEUR ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2010 IT VI20100323**

(43) Date of publication of application:
**09.10.2013 Bulletin 2013/41**

(73) Proprietor: **Reel S.r.l.**
**36024 Ponte di Nanto (VI) (IT)**

(72) Inventor: **BERTOTTO, Ezio**
**I-36050 Bolzano Vicentino (VI) (IT)**

(74) Representative: **Maroscia, Antonio**
**Contrà Porti, 21**
**36100 Vicenza (IT)**

(56) References cited:
| | |
|---|---|
| **EP-A2- 0 156 606** | **WO-A1-2010/102671** |
| **JP-A- 2002 281 701** | **JP-A- 2004 096 808** |
| **JP-A- 2008 048 584** | **KR-A- 20100 080 653** |
| **US-A- 5 818 140** | **US-A1- 2004 150 282** |
| **US-A1- 2009 045 689** | |

**Description**

Field of the invention

The present invention generally finds application in the field of electric machines, and particularly relates to an electric energy generator powered by an external motive energy source, particularly of renewable type, such as a wind energy source.

Background art

Generators are known to comprise a rotating electric machine having a stator and a rotor coupled to a driving shaft, which is driven by an external energy source, for instance an alternative-energy source, such as a wind energy source, or hydraulic or chemical energy sources.

Furthermore, the generator comprises control means for adjusting electrical and dynamic parameters of the electric machine and electric connection means for injecting the electric energy into a supply network or into power storage means, such as electric accumulator units.

A particular type of electric generator comprises double-fed asynchronous electric machine, in which the stator is connected to the external electric network and the rotor is electrically connected to means for adjusting the magnetic field associated therewith.

The control means can adjust the rotation speed of the rotor and maintain it at a predetermined value, so that the electric energy injected into the network has a substantially constant, predetermined power.

Generally, the electric rotating machine in the double-fed generator is an asynchronous electric machine used as a generator.

While this kind of electric machine has a sturdy structure and is particularly advantageous in terms of costs, it still suffers from certain drawbacks.

A first drawback is that asynchronous machines have substantially large dimensions and heavy weights, especially when associated with medium-to-high electric generators, e.g. 500 kW generators.

A further drawback is that these machines have non negligible electrical losses, which considerably reduce the efficiency of the generator.

In an attempt to at least partially obviate these drawbacks, electric generators have been developed, which use rotating electric machines with permanent magnets. Unlike the previous configuration, the electric control means of these generators include a first electrical connection to the windings of the stator and a second electrical connection to the external network.

As a whole, the generators with permanent magnet electric machines provide advantages as compared with asynchronous generators, such as lower magnetic losses, and smaller dimensions and weights.

Nevertheless, permanent magnet machines have a higher cost than double-fed asynchronous machines.

Furthermore, in permanent magnet machines the electric power delivered increases in a substantially linear manner with increasing rotation speed of the rotor.

Accordingly, for the delivered power to be maintained at a substantially constant value, the machine has to be defluxed, i.e. the magnetic field flux therein has to be reduced as the rotation speed of the electric machine changes.

For this purpose, the control means operate on the machine by injecting an electric current having such a direction as to generate a magnetic flux opposite to that generated by the permanent magnets.

A particular drawback of this solution is that, in particular operating conditions, the defluxing current may have a high value and require oversized control means.

Furthermore, in particular transients, defluxing may cause higher electrical losses from the windings of the electric machine, due to the Joule effect.

Electric generators are known which use synchronous electric machines. For example, EP0156606 discloses a generator that comprises a synchronous reluctance electric machine having a laminated rotor.

Document JP 2008 48584 also discloses a related generator.

Nevertheless, these prior art machines have very low electrical efficiencies and are also characterized by high torque ripple.

Disclosure of the invention

The main object of the present invention is to overcome the above drawbacks, by providing a generator that is highly efficient and relatively cost-effective.

A particular object is to provide a generator comprising a rotating electric machine that has particularly high performances and low electrical losses.

A further particular object is to provide a generator whose cost is substantially lower than that of a conventional generator with a rotating electric machine having permanent magnets.

Another particular object is to provide a generator that has smaller size and weight, even for medium-to-high power applications.

A further particular object of the invention is to provide a generator that uses a non-oversized electric machine.

Yet a further particular object of the invention is to provide a generator that has electric adjustment means with lower electric and power specifications than the electric adjustment means of generators comprising rotating electric machines with permanent magnets.

Another important particular object of the invention is to provide a generator that has control means with lower dimensions and weight as compared with the electric adjustment means of generators comprising rotating electric machines with permanent magnets.

These and other objects, as better explained below, are fulfilled by an electric generator as defined in claim 1, comprising a driving shaft with a longitudinal axis, designed to be coupled to an external energy source having a predetermined torque, a synchronous reluctance rotating electric machine having a stator and a transverse-laminated rotor, and a driven shaft operatively coupled to said drive shaft for generating electric energy with torque ripple of predetermined amplitude during operation, electric connection means for injection into the net the electric energy generated by the electric machine and control means designed to adjust electric and dynamic parameters of the electric machine.

The generator is characterized in that the stator has an even number of longitudinal grooves for each pair of poles, the rotor having a plurality of longitudinal slots defining an even number of magnetically equivalent slots, wherein the number of grooves is different from the number of equivalent slots multiplied by an integer, the difference between the number of grooves and the number of equivalent slots being other than zero, +2 and -2.

The generator is further characterized by the additional features of claim 1.

With this particular configuration, a generator may be provided that has particularly high electrical performances in spite of its use of smaller control means, and that also ensures high durability and has lower maintenance requirements.

Advantageous embodiments of the invention are defined in accordance with the dependent claims.

Brief description of the drawings

Further characteristics and advantages of the invention will become more apparent upon reading of the detailed description of a few preferred, non exclusive embodiments of a generator having a reluctance synchronous electric machine, which are described as non limiting examples with the help of the accompanying drawings in which:

 FIG. 1 is a schematized perspective view of a generator of the invention;
 FIG. 2 is a broken away front view of an electric machine that is part of the generator of the invention;
 FIG. 3 is an enlarged view of a detail of Fig. 2;

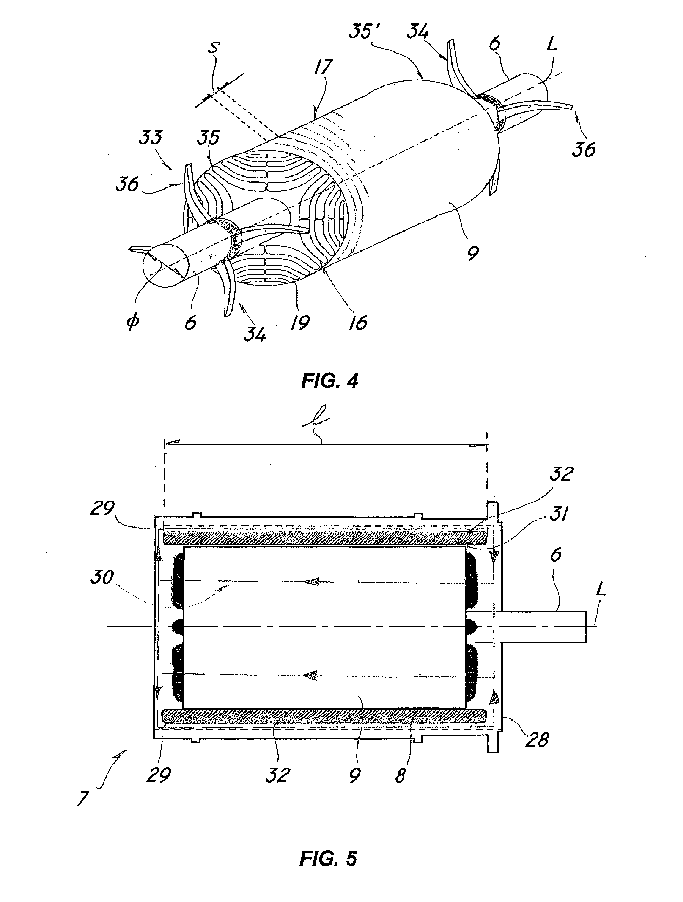

 FIG. 4 is a perspective view of a detail of the generator as shown in Fig. 1;
 FIG. 5 is a sectional side view of an electric machine that is part of the generator in a first configuration;
 FIG. 6 is a sectional side view of an electric machine that is part of the generator in a second configuration;
 FIG. 7 is a sectional front view of an electric machine that is part of the generator in a third configuration;
 FIG. 8 is a sectional side view of the electric machine of Fig. 7;
 FIG. 9 is a schematized side view of a detail of a generator of the invention.

Detailed description of a preferred embodiment

Referring to the above figures, the generator of the invention, generally referenced 1, may be used in systems for producing electric energy from fossil or chemical energy sources, or renewable energy, such as wind or water energy.

The figures show, as a non limiting example, a generator 1 that utilizes a renewable energy source, particularly an aeroturbine 2. It will be appreciated that the aeroturbine 2 may be replaced by a water or steam turbine, i.e. a fossil fueled internal combustion engine.

The wind generator 1 may be used both for small-to-medium power systems, such as in civil and industrial installations, and for high-power systems in terrestrial or on-shore or off-shore installations.

Furthermore, the generator 1 may have a horizontal-axis or vertical-axis design and be wholly contained in a nacelle, not shown, located at the end of the tower, also not shown.

The generator 1 comprises a driving shaft 3 rotating about a longitudinal axis L and adapted to be coupled to the external energy source.

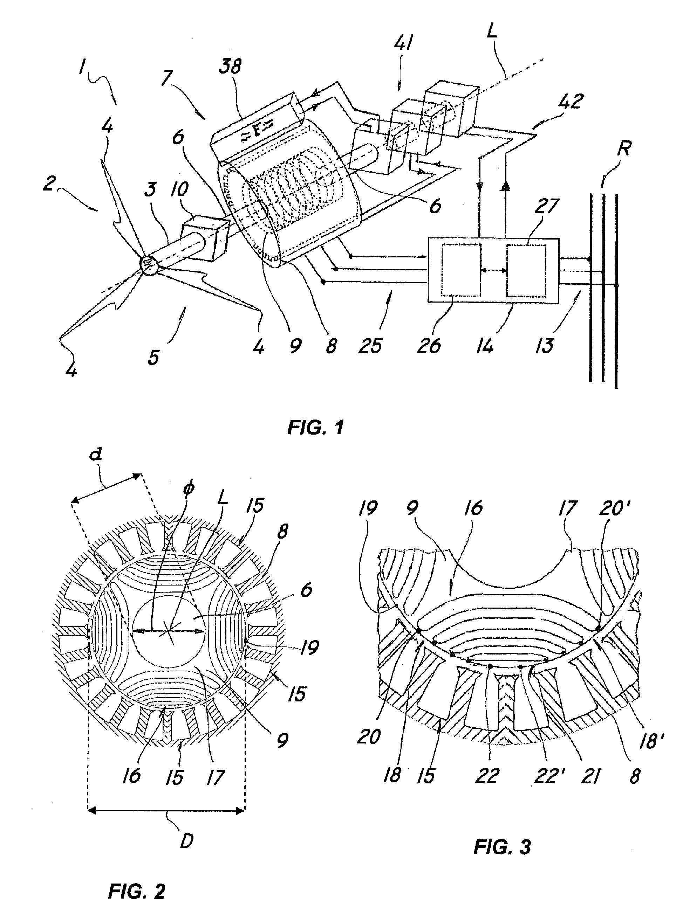

In a wind generator 1, the energy source may comprise a turbine 2 having one or more vanes 4, directly fitted to the driving shaft 3, like in the schematized configuration of Fig. 1, or to a different shaft operably connected to the driving shaft 3 for imparting the motion of the turbine 2 thereto.

As is known, the turbine 2 comprises a propeller 5 with vanes 4, whose angle of inclination may be fixed or be designed to change according to wind force, e.g. using appropriate actuator means, not shown, associated with each vane 4.

Furthermore, the generator 1 may be rotatably supported by a support structure, not shown, to rotate about a vertical axis defined by the support tower, not shown, thereby allowing the wind turbine 2 to be always oriented downwind even when the wind changes its direction.

Therefore, the driving shaft 3 of the generator 1 is coupled to the driven shaft 6 of a rotating electric machine 7 of the synchronous reluctance type.

Particularly, the electric machine 7 comprises a stator 8 having at least one pair of poles and a plurality of longitudinal grooves, generally referenced 15, and a transverse-laminated rotor 9 having the driven shaft 6.

Thus, the electric machine 7 may generate electric energy with predetermined torque ripple during its operation.

For example, the driving shaft 3 may be coupled to the driven shaft 6 of the electric machine 7 by means of a joint 10.

In this configuration, the rotation speed of the driving shaft 3 is substantially coincident with the rotation speed of the driven shaft 6 of the electric machine 7.

In an alternative configuration of the invention, a multiplier device, not shown, may be interposed between one end 11 of the driving shaft 3 and one end 12 of the driven shaft 6, for increasing the rotation speed of the driven shaft 6 as compared with the speed of the driving shaft 3.

The multiplier device may be selected from currently available devices and may include kinematic transmission means, not shown, such as gear wheels, epicyclic gears, or drive belts.

This configuration may be used in a generator 1 with an electric machine 7 operating at a rotation speed substantially higher than that of the drive shaft 3.

The generator 1 further comprises electric connection means 13 for injecting the electric energy generated by the electric machine 7 into the network and control means 14 for adjusting electrical and dynamic parameters of the electric machine 7.

Advantageously, the stator 8 has an even number $n_s$ of longitudinal grooves 15 for each pair of poles and the rotor 9 has a plurality of adjacent longitudinal slots, generally referenced 16, defining an even number $n_r$ of magnetically equivalent slots.

The grooves 15 may be substantially longitudinal, and their length may substantially coincide with the length l of the stator 8.

In the illustrated configuration of the invention, the stator 8 has two pairs of poles and twenty-four grooves 15.

However, it shall be understood that the pairs of poles and hence the grooves 15 may be also provided in different numbers, without limitation to the scope of the present invention.

The rotor 9 is preferably composed of a plurality of disc-line sheet elements 17 having a predetermined thickness s, which are arranged in longitudinally side-by-side relation and are integral with the driven shaft 6.

The inside diameter d of the disc-line sheet elements 17 may substantially coincide with the diameter of the driven shaft 6 of the rotor 9.

Each of these disc-line sheet elements 17 has a plurality of longitudinal through slots 16, which are distributed in substantially identical arrangements in each of them.

Advantageously, the slots 16 may have an elongate curved shape, symmetrical to a radius of the relevant disc-line sheet element 17, with end portions 18, 18' close to the edge 19 of the disc-line element 17, so that each slot 16 can delimit at least one pair of ribs 20, 20' at such edge 19.

The grooves 16 of the rotor 9 are configured so that, during operation of the electric machine 7, the magnetic field in the stator 8 will saturate the ribs 20, 20' which, in essentially magnetic terms, will act as if the disc-line sheet element 17 had an additional slot thereat.

Further saturation areas are located at the central portions 21 of the slots 16 of the rotor 9, that are placed near the peripheral edge 19 of the disc-line sheet element 17.

Particularly, each of these slots 21 near the edge 19 has an additional pair of ribs 22, 22' defining magnetically equivalent slots.

Therefore, the total number of magnetically equivalent slots $n_r$ will be equal to the number of ribs so defined.

According to a peculiar aspect of the invention, the number $n_r$ of magnetically equivalent slots and the number $n_s$ of slots 15 are selected according to a predetermined relation, to minimize torque ripple in the electric machine 7 during operation.

Particularly, the number $n_s$ of grooves 15 is different from the product of equivalent slots by an integer m, and the difference between the number $n_s$ of grooves 15 and the number $n_r$ of equivalent slots is other than 0, +2 and - 2.

Preferably, the number $n_r$ of equivalent slots is also greater than 6.

Concerning the above relations, a particular configuration of the invention may be provided, as shown, in which the rotor 9 comprises a plurality of disc-line sheet elements 17, with the ratio r between their inside diameter d and the outside diameter D falling in a range from 0.4 to 0.8.

Particularly, this ratio r may be 0.45 or more and, also, the number $n_r$ of equivalent slots may be equal to the number $n_s$ of grooves 15 decreased or increased by four units.

In a further configuration, the generator 1 may include a plurality of permanent magnets, generally referenced 23, associated with the rotor 9.

The permanent magnets 23 may be of the type obtained by sintering of base materials containing neodymium (Nd), iron (Fe) and boron (Bo), to obtain a low specific weight while maintaining high magnetic properties, as compared with conventional magnets, such as ferrite magnets or the like.

Nevertheless, it shall be understood that conventional ferrite magnets may be also used.

Such magnets 23 may be provided in such number as to have a smaller magnetic mass than the permanent magnets that are used in permanent magnet electric machines having approximately the same power.

Preferably, the magnetic mass of the permanent magnets 23 may fall in a range from 30 Kg to 150 Kg, preferably from 50 Kg to 125 Kg.

Particularly, according to an exemplary, non-limiting configuration of the invention, a generator that can generate substantially 3 MW electric power at 1000 rpm may comprise an electric machine 7 having permanent magnets with a magnetic mass from 100 Kg to 125 Kg.

In a generator 1 designed to generate substantially 1 MW electric power the above values may be decreased to one third of those mentioned above.

Conveniently, the permanent magnets 23 may be housed in one or more predetermined portions 24, 24', 24", 24'" of the disk-shaped element 17 of the rotor 9.

Each disc-line sheet element 17 will accommodate a permanent magnet 23 with one or more pairs of magnetic poles.

Preferably, but without limitation, the permanent magnets 23 will be held in a central portion 24, 24', 24", 24'" of the disc-line sheet element and accommodated in at least one adjacent slot 16, as shown, to form a rotor 9 with embedded magnets.

Nevertheless, the permanent magnets 23 may be inserted in multiple adjacent slots 16 on different rows, to be arranged in side-by-side relation.

Furthermore, the permanent magnets 23 may be evenly arranged along the axis L of the rotor 9.

Also, the number of permanent magnets 23 will be selected in view of reducing the electrical and/or power specifications of the control means 14 as compared with the control means 14 of the electric machines 7 with permanent magnets 23 having approximately the same power.

For example, the permanent magnets 23 may be designed to generate a magnetic flux ranging from 10% to 20% of the value of the magnetic flux generated by a prior art electric machine 7 with permanent magnets 23, of equal rated power.

This particular configuration of the electric machine 7 can reduce the electrical and power specifications of the control means 14 by a value ranging from 20% to 30% as compared with the control means 14 that are used in electric machines 7 with permanent magnets 23.

Particularly, the control means may be designed to control the electric machine 7 with an electric current ranging from 400 A to 1000 A and preferably from 500 A to 800 A.

The control means 14 of the electric machine 7 include a circuit 25 which is electrically coupled to the stator 8 for adjusting the electrical and dynamic parameters of the electric machine 7.

For example, the control means 14 include an inverter 26, which is designed to maintain the rotation speed of the driven shaft 6 of the electric machine 7 at a predetermined value.

Preferably, the inverter 26 is designed to control the instantaneous rotation speed imparted to the driven shaft 6 by the external source.

The rotation speed of the driven shaft 6 may change in a range from predetermined minimum and maximum values.

Furthermore, the inverter 26 may be designed to control the rotation speed of the driven shaft 6 at periodic and predetermined times.

Any deviation of such speed value from the predetermined value will trigger the action of the inverter 26 and the change of certain electrical parameters of the control signals transmitted thereby to the electric machine 7.

Such changed control signals will allow the electric machine 7 to change its operation and maintain the generated power substantially constant.

Furthermore, in a configuration of the invention, not shown, a programmable logic unit may be provided, which is connected to the control means 14 and can be also connected to the external source, e.g. a wind turbine 2.

For example, in the case of a wind generator 1, the programmable logic unit can keep the power delivered by the electric machine 7 constant as wind conditions change, by operating in a simultaneous and synchronized manner on the inverter 26 and the turbine 2.

The programmable logic unit may change the operating point of the electric machine 7 through the action of the inverter 26 and may also change the action of the wind on the drive shaft 3 by operating on the vanes 4 of the turbine 2, e.g. by changing their angle of inclination.

Furthermore, the control means 14 also include a converter element 27, which is designed to change the electric parameters associated with the energy generated by the electric machine 7, thereby allowing injection thereof into the external transmission network R.

Conveniently, the operating point of the electric machine 7 may be adjusted by changing the electric quantities associated with the signals provided by the control means 14 to the stator 8.

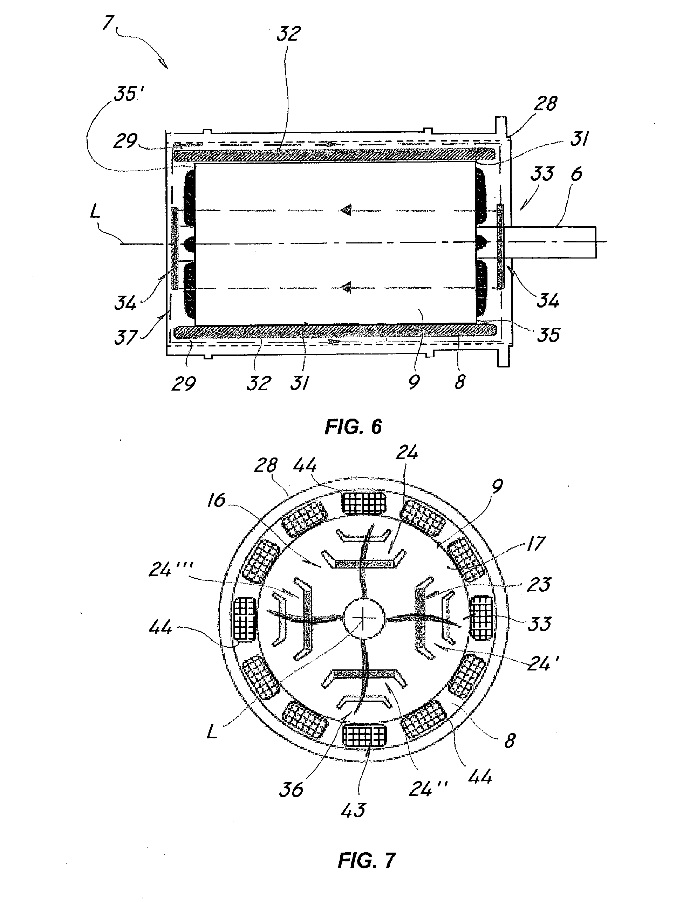

In a particularly advantageous configuration, as shown in Figs. 6 to 9, the electric machine 7 may comprise an outer casing 28 enclosing the assembly of the stator 8 and the rotor 9 with a gap 29 designed to allow the passage of cooling air along looped path 30 that extends through the gap 29, the adjacent slots 16 of the rotor 9 and the interspace 31 between the rotor 9 and the stator 8.

The gap 29 may be formed in the proximity of the peripheral edge 32 of the stator 8 to facilitate heat exchange by the cooling air from within it with the environment.

The looped path 30 so configured will allow the stator 8 and rotor 9 assembly to be cooled by non-forced circulation of a cooling air flow.

Furthermore, the generator 1 may include air cooling means 33 operated by the rotor 9.

Conveniently, the cooling means 33 operated by the rotor 9 may be also provided in synchronous reluctance electric machines 7 that are not used as electric energy generators 1 and may not comply with the mathematical relations associated with the number $n_s$ of grooves and the number $n_r$ of equivalent slots as mentioned above.

According to a particular characteristic of the invention, the cooling means 33 may comprise one or more impeller blades, generally referenced 34, coaxial with the rotor 9, at least at one, preferably at both of the longitudinal ends 35, 35' of the rotor 9, the impellers 34 facing towards at least one end 35, 35' thereof to feed a cooling air flow.

In a preferred, non-limiting configuration of the invention, as shown in the figures, the rotor 9 may comprise a pair of impeller blades 34, each at one end 35, 35' thereof respectively, to increase the air flow fed into adjacent slots 16.

Each impeller blade 34 may be located at a predetermined distance from the corresponding rotor end 35, 35'. Such distance may be identical or different for the two blades 34.

In a further configuration of the invention, not shown, the individual impeller blades 34 may be accommodated at the ends 35, 35' of the rotor 9 by ringshaped fastening members, not shown, which are connected to the driven shaft 6 of the electric machine 7.

Furthermore, each impeller blade 34 may include a plurality of blades, generally referenced 36, which are specially shaped according to the end of the rotor 9 towards which they face.

The blades 36 may be variously shaped to generate an air flow which flows into one end 35, 35' of the rotor and flows out of the opposite end 35', 35.

The two impeller blades 34 may have the same number of blades 36 or different numbers thereof, so that different air flows may be fed at each end 35, 35' of the rotor 9.

Conveniently, the cooling means 33 may comprise a cooling air conduit 37 in fluid connection with the outer casing 28 at one or both ends 35, 35' of the rotor 9 along the path 30.

In the configuration of the figures, the conduit 37 may be closed and comprise the adjacent slots 16 of the rotor 9, the gap 29 and the ends 35, 35' of the rotor 9.

This configuration will provide a greater cooling air flow as compared with the flow generated by non-forced circulation.

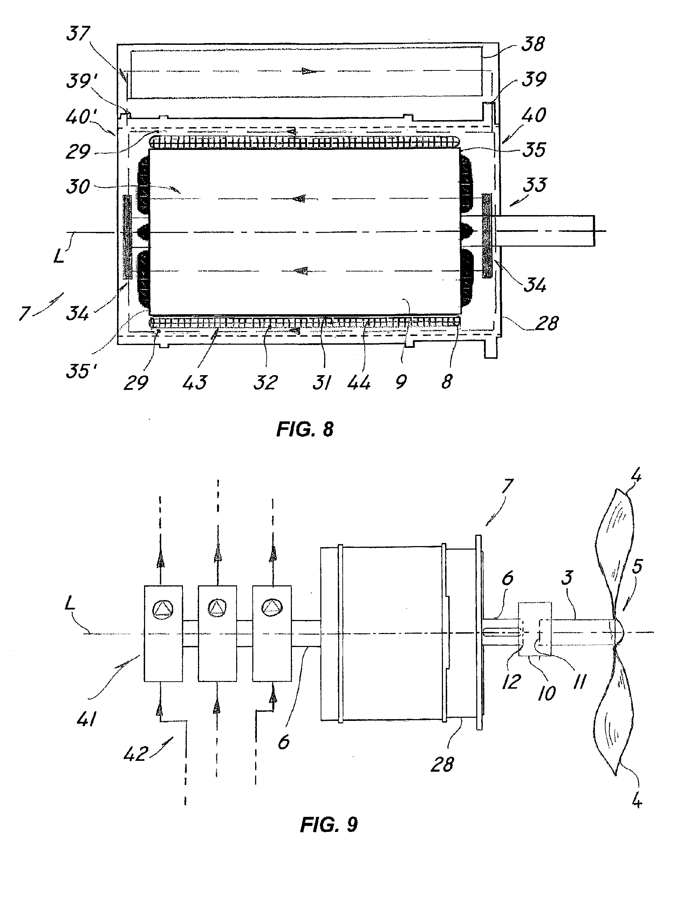

Advantageously, as shown in Fig. 8, the cooling means 33 may comprise a heat exchanger 38 in fluid connection with the gap 29, inside or outside the latter, for air cooling purposes.

The exchanger 38 may be of the air-air or air-fluid type and the cooling air may be fed therein through two openings 39, 39' at the corresponding longitudinal ends 40, 40' of the stator 8.

Advantageously, the cooling means 33 may include one or more pumps, generally referenced 41, which are driven by the driven shaft 6 for feeding corresponding cooling loops, generally designated by numeral 42, associated with the stator 8, the control means 14 and possibly the heat exchanger 38 respectively.

In this configuration, the pumps 41 are only actuated during the movement of the driven shaft 6 and will not operate when the latter does not rotate or has a rotation speed lower than a predetermined value, i.e. not sufficient to actuate them.

Furthermore, each pump 41 may feed the same fluid into all the cooling circuits 42 or feed different fluids into one or more circuits 42.

Conveniently, the flow rate of each pump 41 may be selected according to the amount of fluid requested by each circuit 42.

The configuration so obtained will be particularly efficient and will avoid undesired energy wastes in the cooling circuit. Also, it will allow the generator 1 to be compact, while decreasing its overall weight.

Furthermore, the stator 8 may be of the toothed coil type 43, with stator windings, generally referenced 44, of smaller axial length.

The reduced length of stator coils 44 will allow the conduit 37 to have a greater width and the dimension 1 of the stator 8 to be smaller than in a conventional stator, which will involve a reduction of the longitudinal dimension of the generator 1.

In this configuration, the stator 8 of the electric machine 7 will require a smaller amount of conductive filament, e.g. made of copper, than in conventional stators 8.

The stator 8 of the toothed coil type 43 has a lighter weight and is more cost-effective than a conventional stator 8.

The above disclosure clearly shows that the invention fulfills the intended objects and particularly meets the requirement of providing a generator that has high electrical performances while being cost-effective and having reduced dimensions and weight.

The generator of the invention is susceptible to a number of changes and variants, within the inventive concept disclosed in the appended claims. All the details thereof may be replaced by other technically equivalent parts, and the materials may vary depending on different needs, without departure from the scope of the invention.

While the generator has been described with particular reference to the accompanying figures, the numerals referred to in the disclosure and claims are only used for the sake of a better intelligibility of the invention and shall not be intended to limit the claimed scope in any manner.

**Claims**

1. An electric energy generator powered by an external energy source, such as a wind source, comprising:

   - a driving shaft (3) with a longitudinal axis (L), designed to be coupled to an external energy source having a predetermined torque;
   - a synchronous reluctance rotating electric machine (7) comprising a stator (8) and a transverse laminated rotor (9), and a driven shaft (6) operatively coupled to said drive shaft (3) for generating electric energy with torque ripple of a predetermined amplitude during its operation;
   - electric connection means (13) for injecting into the net (R) the electric energy generated by said electric machine (7);
   - control means (14) designed to adjust electric and dynamic parameters of said electric machine (7);

wherein said stator (8) has an even number ($n_s$) of longitudinal grooves (15) for each pair of poles, said rotor (9) having a plurality of longitudinal slots (16) defining an even number ($n_r$) of magnetically equivalent slots,
**characterized in that** said number ($n_s$) of grooves (15) is different from the number ($n_r$) of equivalent slots multiplied by an integer (m), the difference between said number ($n_s$) of grooves and said number ($n_r$) of equivalent slots being different from zero, +2 and -2, said rotor (9) being formed by a plurality of disc-line sheet elements (17) placed in axially side-by-side relationship, said plurality of longitudinal through slots (16) being formed in each of said plurality of disc-line elements (17), each of said disc-line sheet elements (17) being substantially annular, with an outside diameter (D) and a central through hole of inside diameter (d) which is designed to be coupled with said driven shaft (6), the ratio (r) between said inside diameter (d) and said outside diameter (D) of each of said annular sheet elements (17) being comprised between 0,4 and 0,8.

2. A generator as claimed in claim 1, **characterized in that** said number ($n_r$) of equivalent slots of the rotor (9) is greater than six ($n_r > 6$).

3. A generator as claimed in claim 1, **characterized in that**, for each of said annular disc-line sheet elements (17), said ratio (r) is substantially equal to 0.45 and the number ($n_r$) of equivalent slots is defined from the formula:

$$n_r = n_s \pm 4$$

where $n_s$ is the number of said grooves (15) of said stator (8).

4. A generator as claimed in claim 1, **characterized by** comprising a plurality of permanent magnets (23) inserted in one or more said longitudinal slots (16) of said rotor (9).

5. A generator as claimed in claim 4, **characterized in that** said permanent magnets (23) contain materials selected into the group comprising neodymium (Nd), iron (Fe) and boron (Bo) and have a total magnetic mass comprised between 30 Kg and 150 Kg for a generator having a maximum power comprised between 1 MW and 3 MW.

6. A generator as claimed in claim 5, **characterized in that** said control means (14) are adapted to control said electric machine (7) with electric currents comprised between 400 A and 1000 A, preferably comprised between 500 A and 800 A.

7. A generator as claimed in claim 1, **characterized in that** said control means (14) comprise a circuit (25) electrically coupled to said stator (8) to adjust the electrical and dynamic parameters of said electric machine (7).

8. A generator as claimed in claim 1, **characterized in that** said stator (8) has stator coils (44) having a smaller axial extension than the conventional stators in such a manner to reduce the longitudinal dimension of the generator (1).

**Patentansprüche**

1. Ein elektrischer Energiegenerator, der von einer äußeren Energiequelle angetrieben wird, wie zum Beispiel einer Windquelle, mit

- einer Antriebswelle (3) mit einer longitudinalen Achse (L), die ausgelegt ist für eine Verbindung zu einer äußeren Energiequelle mit einem vorbestimmten Drehmoment,
- einer synchronen, rotierenden, elektrischen Reluktanzmaschine (7) mit einem Stator (8) und einem transversal laminierten Rotor (9) und einer angetriebenen Welle (6), die für den Betrieb mit der Antriebswelle (3) verbunden ist zur Erzeugung elektrischer Energie mit einer Welligkeit des Drehmoments mit einer vorbestimmten Amplitude während ihres Betriebs,
- elektrischen Verbindungseinrichtungen (13) zum Einspeisen in das Netz (R) der elektrischen Energie, die von der elektrischen Maschine (7) erzeugt wird,
- Steuereinrichtungen (14), die ausgelegt sind, elektrische und dynamische Parameter der elektrischen Maschine (7) anzupassen,

wobei der Stator (8) eine gerade Anzahl ($n_s$) von longitudinalen Nuten (15) für jedes Paar von Polen aufweist und der Rotor (9) eine Vielzahl von longitudinalen Schlitzen (16) aufweist, die eine gerade Anzahl ($n_r$) von magnetisch äquivalenten Schlitzen bilden,
**dadurch gekennzeichnet, dass** die Anzahl ($n_s$) von Nuten (15) anders ist als die mit einer ganzen Zahl (m) multiplizierte Anzahl ($n_r$) von äquivalenten Schlitzen, wobei der Unterschied zwischen der Anzahl ($n_s$) von Nuten und der Anzahl ($n_r$) äquivalenten Schlitzen sich von Null, +2 und -2 unterscheidet, der Rotor (9) aus einer Vielzahl von scheibenartigen Blattelementen (17) gebildet ist, die axial in Seite an Seite Bezug angeordnet sind, wobei die Vielzahl von longitudinalen Durchgangsschlitzen (16) gebildet sind in jedem der Vielzahl von scheibenartigen Elementen (17), jedes der scheibenartigen Blattelemente (17) im Wesentlichen ringförmig ist mit einem äußeren Durchmesser (D) und einer zentralen Durchgangsöffnung mit einem inneren Durchmesser (d), die ausgelegt ist mit der Antriebswelle (6) verbunden zu werden und wobei das Verhältnis (r) zwischen dem inneren Durchmesser (d) und dem äußeren Durchmesser (D) von jedem der ringförmigen Blattelemente (17) zwischen 0,4 und 0,8 ist.

2. Generator gemäß Anspruch 1, **dadurch gekennzeichnet, dass** die Anzahl ($n_r$) von äquivalenten Schlitzen des Rotors (9) größer ist als sechs ($n_r > 6$).

3. Generator gemäß Anspruch 1, **dadurch gekennzeichnet, dass** das Verhältnis (r) im Wesentlichen gleich 0,45 ist für jedes der ringförmigen, scheibenartigen Blattelemente (17) und dass die Anzahl ($n_r$) von äquivalenten Schlitzen bestimmt ist nach der Formel:

$$n_r = n_s +/- 4,$$

wobei $n_s$ die Anzahl ($n_s$) der Nuten (15) des Stators (8) ist.

4. Generator gemäß Anspruch 1, **dadurch gekennzeichnet, dass** eine Vielzahl permanenter Magneten (23) vorgesehen ist, die eingesetzt sind in eine oder mehrere der longitudinalen Schlitze (16) des Rotors (9).

5. Generator gemäß Anspruch 4, **dadurch gekennzeichnet, dass** die permanenten Magneten (23) Materialien enthalten, die ausgewählt sind aus der Gruppe, die Neodymium (Nd), Eisen (Fe) und Boron (Bo) umfassen und eine gesamte magnetische Masse haben zwischen 30 Kg und 150 Kg für einen Generator mit einer maximalen Leistung zwischen 1 MW und 3 MW.

6. Generator gemäß Anspruch 5, **dadurch gekennzeichnet, dass** die Steuereinrichtungen (14) angepasst sind, die elektrische Maschine (7) zu steuern mit elektrischen Strömen zwischen 400 A und 1000 A, vorzugsweise zwischen 500 A und 800 A.

7. Generator gemäß Anspruch 1, **dadurch gekennzeichnet, dass** die Steuereinrichtungen (14) eine Schaltung (25) aufweisen, die elektrisch verbunden ist mit dem Stator (8), um die elektrischen und dynamischen Parameter der elektrischen Maschine (7) anzupassen.

8. Generator gemäß Anspruch 1, **dadurch gekennzeichnet, dass** der Stator (8) mit Statorspulen (44) versehen ist, die eine kleinere axiale Erstreckung haben als die herkömmlichen Statoren derart, dass die longitudinale Abmessung des Generators (1) reduziert ist.

## Revendications

1. Un générateur d'énergie électrique alimenté par une source d'énergie électrique externe, telle qu'une source éolienne, comprenant:

   - un arbre menant (3) avec un axe longitudinal (L), destiné à être accouplé à une source d'énergie externe ayant un couple prédéterminé;
   - une machine électrique rotative synchrone à réluctance (7), comprenant un stator (8) et un rotor à feuilletage transversal (9) et un arbre mené (6) accouplé fonctionnellement audit arbre menant (3) pour générer de l'énergie électrique ayant une amplitude prédéterminée d'ondulation de couple pendant son fonctionnement;
   - moyens de connexion électrique (13) aptes à injecter l'énergie électrique générée par ladite machine électrique (7) dans le réseau (R);
   - moyens de contrôle (14) pour le réglage des paramètres électriques et dynamiques de ladite machine électrique (7);

   dans lequel ledit stator (8) a un nombre pair ($n_s$) de rainures longitudinales (15) pour chaque paire de pôles, ledit rotor (9) ayant une pluralité de fentes longitudinales (16) qui définissent un nombre pair ($n_r$) de fentes magnétiquement équivalentes, **caractérisé en ce que** ledit nombre ($n_s$) de rainures (15) est différent du nombre ($n_r$) de fentes équivalentes multiplié par un nombre entier (m), la différence entre ledit nombre ($n_s$) de rainures et ledit nombre ($n_r$) de fentes équivalentes étant autre que zéro, +2 et -2, ledit rotor (9) étant constitué d'une pluralité d'éléments laminaires en forme de disques (17) disposés à côté les uns des autres, ladite pluralité de fentes passantes longitudinales (16) étant formée dans chacune de ladite pluralité d'éléments en forme de disques (17), chacun desdits éléments laminaires en forme de disques (17) étant sensiblement annulaire, avec un diamètre extérieur (D) et un trou passant central avec un diamètre intérieur (d), qui est destiné à être accouplé avec ledit arbre mené (6), le rapport (r) entre ledit diamètre intérieur (d) et ledit diamètre extérieur (D) de chacun desdits éléments laminaires annulaires (17) étant compris entre 0,4 et 0,8.

2. Un générateur selon la revendication 1, caractérisé en ce quel ledit nombre ($n_r$) de fentes équivalentes

du rotor (9) est supérieur à six ($n_r > 6$).

3. Un générateur selon la revendication 1, **caractérisé en ce que**, pour chacun desdits éléments laminaires en forme de disques annulaires (17) ledit rapport (r) est sensiblement égal à 0,45 et le nombre ($n_r$) de fentes équivalents est défini par la formule suivante :

$$n_r = n_s \pm 4$$

où $n_s$ est le nombre desdites rainures (15) dudit stator (8).

4. Un générateur selon la revendication 1, **caractérisé en ce qu'**il comprend une pluralité d'aimants permanents (23) insérés dans une ou plusieurs desdites fentes longitudinales (16) dudit rotor (9).

5. Un générateur selon la revendication 4, **caractérisé en ce que** lesdits aimants permanents (23) contiennent des matières choisies dans le groupe comprenant néodyme (Nd), fer (Fe) et bore (Bo) et ont une masse magnétique totale comprise entre 30 kg et 150 kg pour un générateur ayant une puissance maximum comprise entre 1 MW et 3 MW.

6. Un générateur selon la revendication 5, **caractérisé en ce que** lesdits moyens de contrôle (14) sont aptes à contrôler ladite machine électrique (7) par des courants électriques comprises entre 400 A et 1000 A, de préférence entre 500 A et 800 A.

7. Un générateur selon la revendication 1, **caractérisé en ce que** lesdits moyens de contrôle (14) comprennent un circuit (25) couplé électriquement audit stator (8) pour régler les paramètres électriques et dynamiques de ladite machine électrique (7).

8. Un générateur selon la revendication 1, **caractérisé en ce que** ledit stator (8) comporte des bobines de stator (44) ayant une extension axiale inférieure à celle des stators classiques, de manière à réduire la dimension longitudinale du générateur (1).

**FIG. 1**

**FIG. 2**

**FIG. 3**

**FIG. 4**

**FIG. 5**

**FIG. 6**

**FIG. 7**

**FIG. 8**

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0156606 A

- JP 2008048584 A